# EUROPÄISCHE PATENTANMELDUNG

(11) **EP 2 050 783 A1**
(43) Veröffentlichungstag der Anmeldung: **22.04.2009**
(21) Anmeldenummer: 07020171.0
(22) Anmeldetag: 15.10.2007
(51) Int. Cl.: C08K 5/00, C08K 5/098, C08J 11/06

(54) **Polyester-compounds**

(71) Anmelder: TechnoCompound GmbH, 55566 Bad Sobernheim (DE)
(72) Erfinder: Budzinsky, Winfried, 65812 Bad Soden (DE)
(74) Vertreter: Grünecker, Kinkeldey, Stockmair & Schwanhäusser Anwaltssozietät

(57) **Zusammenfassung**

Die vorliegende Erfindung betrifft ein Polyester-Compound, umfassend
mindestes 30 Gew% eines Polyester-Recyclats; und
0,1 bis 1 Gew% eines Nukleierungsmittels.

Die vorliegende Erfindung betrifft weiterhin ein Verfahren zur Herstellung eines Polyester-Compounds, umfassend die folgenden Schritte:
- Zur Verfügung stellen eines Polyester-Recyclats;
- Vermischen des Recyclats mit einem Nukleirungsmittel; und
- Compoundieren des erhaltenen Gemisches,

wobei der Polyester-Compound mindestes 30 Gew% eines Polyester-Recyclats und 0,1 bis 1 Gew% eines Nukleierungsmittels umfasst.

Der Polyester-Compound ist besonders zur Verwendung bei Formgebungsprozessen geeignet.

## Beschreibung

### Gebiet der Erfindung

Die vorliegende Erfindung betrifft Polyester-Compounds vorwiegend für die Anwendung im Spritzgießverfahren, basierend auf Recyclat aus Polyesterflaschen.

### Hintergrund der Erfindung

Polyethylenterephthalat, weiterhin PET genannt, ist ein teilkristalliner Werkstoff und findet vielfältige Anwendung wie zum Beispiel als Folien, Fasern, Lebensmittelverpackungen oder technische Teile. Ebenso vielfältig wie die Anwendungen sind auch die Verarbeitungsverfahren.

Ein bekanntes und großes Anwendungsgebiet sind Hohlkörper, zum Beispiel Flaschen für Mineralwasser oder Säfte. Das hierfür verwendete PET's sind PET-Homopolymere und überwiegend PET- Copolymere mit geringen Anteilen an Comonomeren, d.h. weiteren Diolkomponenten und Dicarbonsäurekomponenten oder andere geeignete Comonomere (im folgenden PET oder PET - Flaschenware genannt). Die Copolymere haben das Ziel, die Kristallinität bei der Verarbeitung, meist Spritzblasen, zu unterdrücken und eine amorphe und damit verbunden eine transparente Einstellung der Formköper zu erhalten.

Bei Anwendungen von PET im Spritzguss werden vorwiegend teilkristalline, meist homopolymere Einstellungen gefordert, die zudem noch häufig zum Beispiel mit Füll- und Verstärkungsstoffen modifiziert sind, stabilisiert und nukleiert sein können, Flammschutzsysteme, Entformungshilfen, Substanzen, die die Kristallisation beschleunigen als auch Farbmittel enthalten können. Mit diesen Produkten werden unter produktgerechten Bedingungen praxisgerechte Kühl- und Zykluszeiten bei der Verarbeitung erreicht. Im Gegensatz zur Flaschenware können hohe Steifigkeiten und E-Module erzielt werden. Je nach Rezeptur müssen die Werkzeugtemperaturen zur Erzielung der optimalen Fertigteilqualität zwischen 90 und 150 °C liegen.

PET - Hohlkörper werden nach Gebrauch recycelt. Das Recyclat (weiterhin PET oder PET-Flaschenware oder Flaschenware-Recyclat genannt) wird teilweise in die Flaschenproduktion zurückgeführt und teilweise ausgeschieden. Dieses Produkt ist in Mengen auf dem Markt, wird aber nicht als Rohstoff für Compounds zur Spritzgießverarbeitung eingesetzt, da es insbesondere bisher nicht möglich war, Einstellungen zu entwickeln, die sowohl Verarbeitungs- und Produkteigenschaften eines marktgängigen Polyestercompounds für die Spritzgießverarbeitung erreichen.

### Aufgabe der Erfindung

Es war daher die Aufgabe der vorliegenden Erfindung, ein Polyester-Compound insbesondere für Formgebungsprozesse basierend auf Sprizugusverfahren, mit marktgerechtem Verarbeitungsverhalten und marktgerechter Qualität des Endproduktes auf Basis recycelter Polyester, insbesondere aus recycelter Hohlkörperware, bereitzustellen, sowie ein Verfahren zu dessen Herstellung. Diese Compounds sollten weiterhin auf marktüblichen Compoundieranlagen herstellbar sein, um den apparativen Aufwand so gering wie möglich zu halten.

### Zusammenfassung der Erfindung

Diese Aufgabe wird durch die Ansprüche 1 bis 15 gelöst. Bevorzugte Ausgestaltungen sind weiterhin in der folgenden Beschreibung gegeben.

### Detaillierte Beschreibung der Erfindung

Das erfindungsgemäße Polyester - Compound basiert auf Flaschenware - Recyclat. Durch die Wahl des geeigneten Nukleierungsmittels werden unerwartet die Verarbeitungs- und Produkteigenschaften eines marktgängigen PET- Compounds für die Spritzgießverarbeitung erreicht.

Ein bevorzugtes Nukleierungsmittel umfasst ein Metallsalz einer organischen Säure, bevorzugt ein Alkalimetallsalz oder ein Erdalkalimetallsalz ist. Bevorzugt sind die Natriumsalze.

Unter Metallsalze der organischen Säure sind Metallsalze von Carbonsäuren mit einer Anzahl von 3 bis 40 Kohlenstoffatomen bevorzugt, noch bevorzugter mit 10 bis 35 Kohlenstoffatomen. In Ausführungsformen sind Carbonsäuren mit 12 bis 20 Kohlenstoffatomen besonders geeignet, in anderen Ausführungsformen sind solche Carbonsäuren bevorzugt, die 20 bis 30 Kohlenstoffatome aufweisen.

Unter den Nukleierungsmitteln sind Metallsalze von Fettsäuren bevorzugt. Diese können gesättigt oder ungesättigt sein. Sie können weiterhin verzweigt oder gradlinig sein. Bevorzugt sind Metallsalze von gradlinigen, gesättigten Fettsäuren, besonders bevorzugt die Natriumsalze von gradkettigen, gesättigten Fettsäuren, ganz besonders von Fettsäuren mit einerseits 12 bis 20 Kohlenstoffatomen, und weiterhin auch mit 20 bis 30 Kohlenstoffatomen.

Das Nukleierungsmittel wird in einer Menge von 0,1 bis 1 Gew% zugesetzt, bevorzugt in Mengen von 0,2 bis 0,8 Gew%, und noch bevorzugter in einer Menge von 0,3 bis 0,7 Gew%.

Das erfindungsgemäße Polyester - Compound kann bis zu 15 Gew%, bevorzugt bis zu 10 Gew% einer geeigneten Substanz, bevorzugt Polyethylenglykol-Copolymer, mit dem Ziel enthalten, die Kristallisation zu beschleunigen. PET-Compounds ohne diese Substanzen können bei ca. 135°C Werkzeugtemperatur im Spritzguß verarbeitet werden, PET-Compounds mit diesen Substanzen benötigen dagegen eine Werkzeugtemperatur von ca. 100°C.

Diese Kristallisationsbeschleuniger werden verwendet, um die erforderliche Werkzeugtemperatur von ca. 135°C beim Spritzgießen bei Einstellungen ohne Kristallisationsbeschleuniger auf Werkzeugtemperaturen von ca. 100°C zu senken.

Der Polyster-Compound kann außerdem frisches Polyestermaterial umfassen. Wenn dem Polyester-Compound frisches Polyestermaterial zugesetzt wird, kann dies bevorzugt in einer Menge von bis zu 50 Gew% zugesetzt werden, noch bevorzugter in einer Menge von bis zu 40 Gew%, und am meisten bevorzugt in einer Menge von bis zu 30 Gew%.

Das erfindungsgemäße Polyester - Compound kann neben dem Flaschenware - Recyclat jungfräuliches PET mit und ohne Kristallisationshemmer sowie die für Kunststoffmassen üblichen Zuschlagstoffe wie zum Beispiel handelsübliche Glasfasern, Glaskugeln, Glasflakes, Wärme - und Verarbeitungsstabilisatoren, Entformungshilfen, Füllstoffen, Schlagzähmodifizierern, Flammschutzmittel, Mineralien oder Farbmittel enthalten. Geeignete Mengen für diese weiteren Inhaltsstoffe sind 5 bis 60 Glasfasern, 5 bis 40 Gew% Glaskugeln, 5 bis 40 Gew% Glasflakes, 0,1 bis 1 Gew% Wärme - und Verarbeitungsstabilisatoren, 0,1 bis 1 Gew% Entformungshilfen, 5 bis 50 Gew% Füllstoffen, 3 bis 25 Gew% Schlagzähmodifizierern, 5 bis 50 Gew% Flammschutzmittel, umfassend mehrkomponentige Systeme (z.B. bromiertes Polymer und Antimontrioxid), halogenhaltige und halogenfreie Systeme, wobei die halogenhaltigen Systeme bevorzugt in einer Menge von 5 bis 25 Gew% eingesetzt werden, 5 bis 50 Gew% Mineralien und/oder 1 ppm bis 10 Gew% Farbmittel.

Die intrinsische Viskosität (IV) nach DIN 53728 des erfindungsgemäßen Polyester-Compound liegt bevorzugt im Bereich von 0,6 bis 1,2 ml/g, insbosondere 0,8 bis 0,9 ml/g.

Das erfindungsgemäße Polyester- Compound eignet sich besonders als Material für Matrixwerkstoffe in Formgebungsprozessen wie Extrusionsverfahren, Pressverfahren, bevorzugt im Spritzgießverfahren.

Durch das erfindungsgemäße Produkt werden Polyester dem Wertstoffkreislauf zugeführt und als Rohstoff recycliert. Besonders bevorzugt ist dabei PET, ganz besonders Flaschenware - Recyclat. Das Verfahren trägt damit zur Vermeidung von Abfällen und dadurch zum Umweltschutz bei und bietet gleichzeitig die Möglichkeit, Polyester - Compounds bereitzustellen, die sich vor allem als Material für Matrixwerkstoff in Formgebungsprozessen wie Spritzgießverfahren, Extrusion und Pressen eignen und marktgerechte Eigenschaften aufweisen.

Das erfindungsgemäße Polyester- Compound weist in vorteilhafter Weise mit Compounds auf Basis von Neumaterial vergleichbare physikalische Eigenschaften auf und kann daher überall dort eingesetzt werden, wo PET- Compounds auf Basis von Neumaterial Verwendung finden.

Die Erfindung betrifft weiterhin ein Verfahren zur Herstellung eines Polyester-Compounds, umfassend die folgenden Schritte:
- Zur Verfügung stellen eines Polyester-Recyclats;
- Vermischen des Recyclats mit einem Nukleirungsmittel; und
- Compoundieren des erhaltenen Gemisches,
wobei der Polyester-Compound mindestes 30 Gew% eines Polyester-Recyclats und 0,1 bis 1 Gew% eines Nukleierungsmittels umfasst.

Die bevorzugten Ausführungsformen, die oben für den erfindungsgemäßen Polyester-Compound gegeben wurden, gelten ebenfalls für den mit dem erfindungsgemäßen Verfahren hergestellten Polyester-Compound.

Durch das erfindungsgemäße Verfahren werden Polyester dem Wertstoffkreislauf zugeführt und als Rohstoff recycelt. Besonders bevorzugt ist dabei PET als Polyester, ganz besonders PET aus Hohlkörpermaterial, beispielsweise PET-Flaschen. Das Verfahren trägt damit zur Vermeidung von Abfällen und dadurch zum Umweltschutz bei und bietet gleichzeitig die Möglichkeit, Polyester-Compounds bereitzustellen, die sich vor allem als Material für Matrixwerkstoff in Formgebungsprozessen, wie Spritzgussverfahren, Extrusionsverfahren und Pressverfahren eignen und Eigenschaften mit marktgerechten Eigenschaften aufweisen.

### Beispiele

Als Vergleichsmaterial wurde ein handelsübliches Produkt für Spritzgussanwendung ohne Kristallisationsbeschleuniger und ohne Recyclatanteil aber mit 30% Glasfasern verwendet. Die empfohlene Werkzeugtemperatur beim Spritzgießen beträgt 135°C.

Zur Herstellung der weiteren Compounds wurden Mischungen aus Flaschenware - Recyclat und den angegebenen Additiven hergestellt und die Mischung auf einem handelsüblichen Zweiwellen - Compounder unter den für PET üblichen Bedingungen eingearbeitet. Der 30 Gew% Anteil an Glasfaser wurde in die Schmelze dosiert.

Probekörper wurden auf einer handelsüblichen Maschine nach ISO 7792-2 hergestellt.

Die Dauer des Spritzgießvorganges bestimmt u.a. die Wirtschaftlichkeit der Herstellung. Bei sonst konstanten Bedingungen ist die Kühlzeit der bestimmende Faktor für die Verweilzeit. Bei Produkten ohne Kristallisationsbeschleuniger wurde eine Werkzeugtemperatur von 135°C, bei Produkten mit Kristallisationsbeschleuniger eine Werkzeugtemperatur von 100°C gewählt.

Es wurden Probekörper für den Zugversuch nach ISO 527 hergestellt.

### Beispiel 1

Das erfindungsgemäße Polyester - Compound wurde wie zuvor beschrieben compoundiert und zu Probekörpern verspritzt. Das erfindungsgemäße Polyester- Compound enthält 30% Glasfasern, Entformungshilfe und 0,5% eines Natriumsalzes von gradkettigen, gesättigten Fettsäuren mit 18 Kohlenstoffatomen. Die Werkzeugtemperatur beim Spritzgießen betrug 135°C.

| Eigenschaft | Norm | DIM | Erfindungsgemäßes Polyester-Compound | Polyester-Compound mit einem nicht erfindungsgemäßen Nukleierungsmittel | Vergeichsprobe (handelsübliche Produkt) |
|---|---|---|---|---|---|
| Kühlzeit | | | 15 | > 100 | 10 |
| Schmelzpunkt 10°C/min | | | 240 | 241 | 255 |
| Bruchspannung | ISO 527 | MPa | 140 | 100 | 147 |
| Bruchdehnung | ISO 527 | % | 1,8 | 1,0 | 1,6 |
| Zug-E-Modul | ISO 527 | MPa | 10230 | 9800 | 11100 |

Die Tabelle zeigt, dass trotz der Verwendung von Flaschenware - Recyclat das erfindungsgemäße Polyester - Compound hinsichtlich der Fertigung analoge Kühlzeiten erbringt wie das Vergleichsmaterial. Die mechanischen Eigenschaften des erfindungsgemäßen Polyester - Compounds sind besser als die des Vergleichsbeispiels mit einem anderen Nukleierungsmittel.

Die Einstellung mit einem anderen herkömmlichen Nukleierungsmittel führt zu extrem langen Kühlzeiten und schlechten mechanischen Eigenschaften.

### Beispiel 2

Das erfindungsgemäße Polyester - Compound wurde wie zuvor beschrieben compoundiert und zu Probekörpern verspritzt. Das erfindungsgemäße Polyester - Compound enthält 30% Glasfasern, Entformungshilfe und 0,5% eines Natriumsalzes einer gradkettigen, gesättigten Fettsäure mit 18Kohlenstoffatomen. Zusätzlich wurden 2 % eines Kristallisationsbeschleunigers beim Compoundieren zugefügt. Bei diesem Beispiel wurde die Werkzeugtemperatur auf 100°C eingestellt. Die Verarbeitungsparameter und Materialeigenschaften waren wie in Beispiel 1 für das erfindungsgemäße Beispiel.

Bei dieser Werkzeugtemperatur sind weder bei dem Polyester-Compound mit einem üblichen Nukleierungsmittel noch bei der Vergeichsprobe (handelsübliche Produkt) brauchbare Probekörper zu fertigen. Das erfindungsgemäße Polyester - Compound weist unter diesen Bedingungen sehr kurze Kühlzeiten und gute mechanische Eigenschaften auf.

## Patentansprüche

1. Polyester-Compound, umfassend
mindestes 30 Gew% eines Polyester-Recyclats; und
0,1 bis 1 Gew% eines Nukleierungsmittels.

2. Polyester-Compound gemäß Anspruch 1, wobei das Nukleierungsmittel ein Metallsalz einer organischen Säure umfasst.

3. Polyester-Compound gemäß Anspruch 2, wobei das Metallsalz der organischen Säure ein Alkalimetallsalz einer Fettsäure mit 10 bis 35 Kohlenstoffatomen ist.

4. Polyester-Compound gemäß einem der Ansprüche 1 bis 3, wobei das Compound weiterhin bis zu 15 Gew% eines Kristallisationsbeschleunigers umfasst.

5. Polyester-Compound gemäß Anspruch 4, wobei der Kristallisationsbeschleuniger ein Polyethylenglykol-Copolymer umfasst.

6. Polyester-Compound gemäß einem der Ansprüche 1 bis 5, wobei das Compound weiterhin 5 bis 60 Gew% Glasfasern umfasst.

7. Polyester-Compound gemäß einem der Ansprüche 1 bis 6, wobei der Polyester Polyethylenterephthalat ist.

8. Verfahren zur Herstellung eines Polyester-Compounds, umfassend die folgenden Schritte:
- Zur Verfügung stellen eines Polyester-Recyclats;
- Vermischen des Recyclats mit einem Nukleirungsmittel; und
- Compoundieren des erhaltenen Gemisches,
- wobei der Polyester-Compound mindestes 30 Gew% eines Polyester-Recyclats und 0,1 bis 1 Gew% eines Nukleierungsmittels umfasst.

9. Verfahren gemäß Anspruch 8, wobei das Nukleierungsmittel ein Metallsalz einer organischen Säure umfasst.

10. Verfahren gemäß Anspruch 9, wobei das Metallsalz der organischen Säure ein Alkalimetallsalz einer Fettsäure ist.

11. Verfahren gemäß einem der Ansprüche 8 bis 10, wobei das Compound weiterhin bis zu 5 Gew% eines Kristallisationsbeschleunigers umfasst.

12. Verfahren gemäß Anspruch 11, wobei der Kristallisationsbeschleuniger ein Polyethylenglykol-Copolymer umfasst.

13. Verfahren gemäß einem der Ansprüche 8 bis 12, wobei das Compound weiterhin 5 bis 60 Gew% Glasfasern umfasst.

14. Verfahren gemäß einem der Ansprüche 8 bis 13, wobei der Polyester Polyethylenterephthalat ist.

15. Verwendung des Polyster-Compounds gemäß einem der Ansprüche 1 bis 7 als Material für Spritzgussverfahren.
